# FASCICULE DE BREVET EUROPEEN

(11) **EP 2 941 903 B1**
(45) Date de publication et mention de la délivrance du brevet: **15.02.2017**
(21) Numéro de dépôt: 13821890.4
(22) Date de dépôt: 24.12.2013
(51) Int. Cl.: H04R 7/12

(54) **MEMBRANE DE HAUT-PARLEUR, ET PROCÉDÉ DE FABRICATION D'UNE TELLE MEMBRANE**
LAUTSPRECHERMEMBRAN UND VERFAHREN ZUR HERSTELLUNG SOLCH EINER MEMBRAN
LOUDSPEAKER MEMBRANE AND METHOD FOR MANUFACTURING SUCH A MEMBRANE

(30) Priorité: 07.01.2013 FR 1350116
(43) Date de publication de la demande: 11.11.2015
(73) Titulaire: FOCAL JMLab, 42350 La Talaudière (FR)
(72) Inventeur: DE LA NOUVELLE, Bruno, 42660 Saint Genest Malifaux (FR); HOSOI, Shintaro, 69007 Lyon (FR)
(74) Mandataire: Cabinet Laurent & Charras
(86) Numéro de dépôt international: PCT/FR2013/053266
(87) Numéro de publication internationale: WO 2014/106713

(56) Documents cités:
- US-A1- 2006 281 381
- US-A1- 2010 288 579
- US-B1- 6 378 649

## Description

### DOMAINE TECHNIQUE

L'invention se rattache au domaine du matériel acoustique, et plus précisément des haut-parleurs. Elle vise plus spécifiquement une nouvelle structure de membrane de haut-parleur qui combine de multiples avantages en termes de performance acoustique et de facilité de fabrication.

### TECHNIQUES ANTERIEURES

De façon générale, les membranes de haut-parleur forment la partie mobile d'un haut-parleur qui assure la mise en mouvement de l'air environnant, nécessaire pour la création d'ondes acoustiques.

Les membranes de haut-parleur se caractérisent au moins par trois paramètres mécaniques qui ont des incidences sur les performances du haut-parleur.

Ainsi, un premier paramètre concerne la rigidité de la membrane. En effet, plus une membrane est rigide, moins elle est déformable, et donc plus elle assure un rôle de piston permettant de générer des mouvements des masses d'air avoisinantes avec une cinématique fidèle au signal de commande. En d'autres termes, plus une membrane est rigide, et plus elle permet, en particulier à basse fréquence, un fonctionnement en piston, limitant, voir éliminant les phénomènes de distorsion, en particulier dans la bande de fréquence grave.

Par ailleurs, un autre paramètre critique d'une membrane concerne sa masse. En effet, plus une membrane est légère, plus elle peut être déplacée à haute fréquence avec une amplitude satisfaisante, à un niveau d'énergie d'activation constante. En d'autres termes, plus une membrane est légère, plus elle autorise une accélération importante, lui permettant de reproduire fidèlement les fréquences élevées, et ce sans générer de phénomène de trainage dans les fréquences graves.

Enfin, un troisième paramètre critique d'une membrane concerne son amortissement, qui se caractérise par son facteur de surtension mécanique. Ainsi, plus cet amortissement est important, et donc plus le facteur de surtension est faible, plus cette membrane joue un rôle neutre, en particulier dans les fréquences intermédiaires, pour éviter l'intermodulation de la fréquence de résonance propre de la membrane avec le signal reproduit. En d'autres termes, plus une membrane est amortie, plus la reproduction du son sera fidèle.

Bien évidemment, la membrane idéale est celle qui possède à la fois une très forte rigidité, tout en étant extrêmement légère et particulièrement amortie. On conçoit que les matériaux obligent à réaliser des compromis pour privilégier l'un ou l'autre de ces paramètres, en fonction de l'application souhaitée.

Diverses solutions ont d'ores et déjà été proposées, elles présentent chacune leurs avantages, mais également leurs inconvénients.

Une première solution consiste à réaliser des membranes à base d'un matériau unique, choisis pour sa forte rigidité. Il peut s'agir de métal, tel que l'aluminium, ou encore de matériau composite, combinant des fibres de verre ou d'aramide imprégnées d'une résine epoxy. L'inconvénient principal de ces solutions réside dans leur poids relativement important pour obtenir un niveau de rigidité satisfaisant

Par ailleurs, il a été décrit dans le brevet FR 2 615 345, une structure de membrane formée d'un sandwich de deux peaux fibreuses, placées de part et d'autre d'une couche d'une résine thermodurcissable renfermant des sphères microscopiques de très haute rigidité, et en particulier à base de verre. La présence de ces microsphères augmente la rigidité de la membrane, ce qui peut être satisfaisant pour la reproduction des sons à basse fréquence. Toutefois, la réalisation pratique de ce type de membre s'avère particulièrement délicate, et conduit à de forts taux de rejets pour non-conformité aux spécifications.

Une autre solution a été décrite dans le document FR 2 731 579. Les membranes décrites dans ce document sont composées par une structure sandwich, qui comporte une âme à base d'une mousse thermoformée, sur laquelle sont appliquées de part et d'autre des feuilles textiles à base de fibre de haute ténacité, et en particulier de fils de verre, imprégnés d'une résine thermodurcissable. Une variante a été décrite dans le document US 2010/0288579, dans lequel l'âme est réalisée à partir d'un non tissé de fibres synthétiques imprégnées. L'emploi de structures sandwich, combinant deux couches de forte rigidité séparées par une âme permet d'augmenter très notoirement à poids constant le niveau de rigidité de la membrane par rapport aux solutions mono-matériau.

Cependant, malgré l'intérêt en termes de rigidité de ces structures composites sandwich, on note des inconvénients liés au procédé de fabrication qui est relativement complexe et coûteux. En effet, pour obtenir une membrane à la forme géométrique bien définie, il est nécessaire de thermoformer la mousse qui constitue l'âme de la membrane dans une étape préalable, puis d'y appliquer les deux peaux constituées par les feuilles textiles, avant d'exposer l'ensemble à une source de chaleur permettant de polymériser la résine imprégnant les feuilles textiles. Ces opérations, obligatoirement manuelles, peuvent être relativement longues et nécessitent des manipulations délicates.

Ainsi, un des problèmes que se propose de résoudre l'invention est celui de fournir une membrane qui présente de hautes performances mécaniques, tant en rigidité qu'en masse et amortissement, et qui puisse être fabriquée selon un procédé simplifié, voire automatisable.

### EXPOSE DE L'INVENTION

L'invention concerne donc une membrane de haut-parleur, possédant une structure sandwich comportant une âme centrale séparant en deux couches extérieures de matériau à base de fils de haute rigidité, imprégnés d'une résine polymérisée.

Conformément à l'invention, cette membrane se caractérise en ce que l'âme centrale est exclusivement formée d'une couche de matériau à base de fibres naturelles orientées sensiblement parallèlement, et imprégnées d'une résine polymérisée.

Autrement dit, les deux peaux extérieures de la membrane sont séparées par une couche réalisée à base de fibres naturelles formant des faisceaux sensiblement parallèles, permettant de par leur épaisseur, d'écarter suffisamment les deux peaux pour obtenir la rigidité voulue.

En d'autres termes, la membrane est formée d'un stratifié mixant différent types de fibres noyés dans une même matrice. Cette structure présente un gradient de masse volumique et de module d'Young depuis la fibre neutre vers la surface : le coeur du stratifié est léger et amorti, sa surface est rigide et l'ensemble est parfaitement marié dans une matrice commune. Grâce à cette combinaison, on concilie au moins partiellement les critères paradoxaux de rigidité en flexion/faible masse/fort amortissement.

Bien que de masse supérieure à la mousse thermoformée utilisée dans les solutions antérieures, la membrane selon l'invention présente l'avantage majeur de pouvoir être réalisée de manière beaucoup plus simple, puisque ne nécessitant pas d'opération préalable de thermoformage. En effet, la mise en forme de l'âme se fait en même temps que le durcissement de la résine imprégnant les peaux. Cette mise en forme est facilitée par le fait que les fibres naturelles de la couche centrale glissent par rapport aux fibres de peaux lors de la déformation depuis la configuration pleine à la configuration souhaitée.

Par ailleurs, de manière inattendue, le Demandeur a constaté que l'emploi de fibres naturelles orientées, sous forme de nappe unidirectionnelle, n'induit pas de comportement spécifique lié à cette orientation. Au contraire, il semble que le caractère orthotrope des peaux recouvrant la membrane, constituées préférentiellement par une structure tissée, peut conduire à des phénomènes de couplage vibratoire des modes propres lorsque la membrane est excitée mécaniquement. Or, il semble que la présence des fibres naturelles orientées grâce à leur configuration quelque peu irrégulière atténue ces phénomènes de couplage, en jouant donc en faveur d'une amélioration de l'amortissement de la membrane.

En pratique, les fibres naturelles utilisées peuvent être choisies dans le groupe comprenant principalement le lin, mais aussi la soie, le chanvre, la ramie, le coco, le sisal, le jute le bambou et le coton, pris isolément ou en combinaison. Les fibres naturelles se présentent de préférence sous forme de nattes de fibres mises en parallèle, sans avoir subi d'opérations nécessaire pour la mise en fils, tels que le retordage. Les fibres sont également de préférence non traitées chimiquement, et n'ont donc préférentiellement pas subi d'étape d'ensimage.

De façon préférée, les fibres naturelles se présentent sous forme d'une nappe unidirectionnelle, dans laquelle les différentes nattes sont disposées parallèlement, sans flexion ni embuvage, par opposition à une structure tissée.

Avantageusement en pratique, les couches extérieures formant les peaux de la membrane sont réalisées à base d'une structure tissée, bien qu'il soit également possible d'utiliser des structures de type non-tissé.

Selon une caractéristique de l'invention, les fils de haute rigidité, c'est-à-dire présentant un très fort module d'Young, inclus dans les couches extérieures peuvent être en un matériau choisi dans le groupe comprenant le verre, l'aramide, le carbone, chacun de ces matériaux étant pris isolément ou en combinaison.

En pratique, on privilégiera les imprégnations à base de résine permettant d'obtenir une bonne rigidité, ce qui est en particulier le cas des résines thermodurcissables, et notamment de la résine epoxy.

En pratique, l'âme réalisée à base de fibres naturelles peut présenter une épaisseur comprise entre quelques dixièmes de millimètres et quelques millimètres, typiquement entre 0,2 et 3 mm, et préférentiellement entre 0,3 et 1mm.

Selon un autre aspect de l'invention, celle-ci concerne un procédé de fabrication d'une membrane de haut-parleur. Conformément à l'invention, ce procédé comporte les étapes suivantes :
- formation d'un empilement comprenant :
   ▪ une première couche de matériau à base de fils de haute rigidité ;
   ▪ une couche d'âme exclusivement formée d'une couche matériau à base de fibres naturelles orientées sensiblement parallèlement ;
   ▪ une deuxième couche de matériau à base de fils de haute rigidité ;
- la mise en forme dudit empilement par application d'une exposition à une source de chaleur, de manière à polymériser une résine présente dans ledit empilement ;
- la découpe de l'empilement mis en forme aux contours souhaités de la membrane.

Autrement dit, le procédé conforme à l'invention présente l'avantage d'effectuer la mise en forme de l'ensemble des couches constituant la structure sandwich en une seule et unique étape, ce qui simplifie grandement le procédé de fabrication.

Diverses variantes peuvent être envisagées en ce qui concerne la manière dont la résine d'imprégnation est mise en place sur les différentes couches.

Ainsi, dans une première forme d'exécution, les couches de matériau à base de fils de haute rigidité sont imprégnées d'une résine polymérique avant la réalisation de l'empilement. Autrement dit, on utilise des peaux pré-imprégnées, qui peuvent dans un cas particulier privilégié avoir été imprégnées avec une quantité de résine excédante qui pourra ensuite fluer à l'intérieur de la couche d'âme lors de la mise en forme. Dans ce cas de figure, les manipulations de préparation sont simplifiées, puisqu'elles ne nécessitent aucun déversement de résine. Il est également possible d'utiliser une âme à base de fibres naturelles qui a été pré imprégnée dans une étape spécifique.

Dans une autre forme d'exécution, l'empilement peut être réalisé à partir de couches sèches, étant entendu que l'on dépose sur l'empilement une résine polymérique de telle sorte qu'elle imprègne l'ensemble des couches, pour ensuite être réticulée lors de la mise en forme. Dans ce dernier cas, les manipulations de différents matériaux sont facilitées, puisqu'ils sont assemblés sous forme sèche.

### DESCRIPTION SOMMAIRE DES FIGURES

La manière de réaliser l'invention, ainsi que les avantages qui en découlent ressortiront bien de la description du mode de réalisation qui suit, à l'appui des figures annexées dans lesquelles :
- la figure 1 est une vue en perspective sommaire d'un empilement de différentes couches, montrées partiellement écorchées, permettant de réaliser la membrane conforme à l'invention ;
- la figure 2 est une vue en coupe transversale d'un empilement de la figure 1 après sa mise en forme, et avant sa découpe au contour de la future membrane.

### MANIERES DE REALISER L'INVENTION

Comme déjà évoqué, la membrane conforme à l'invention se compose d'un empilement de plusieurs couches.

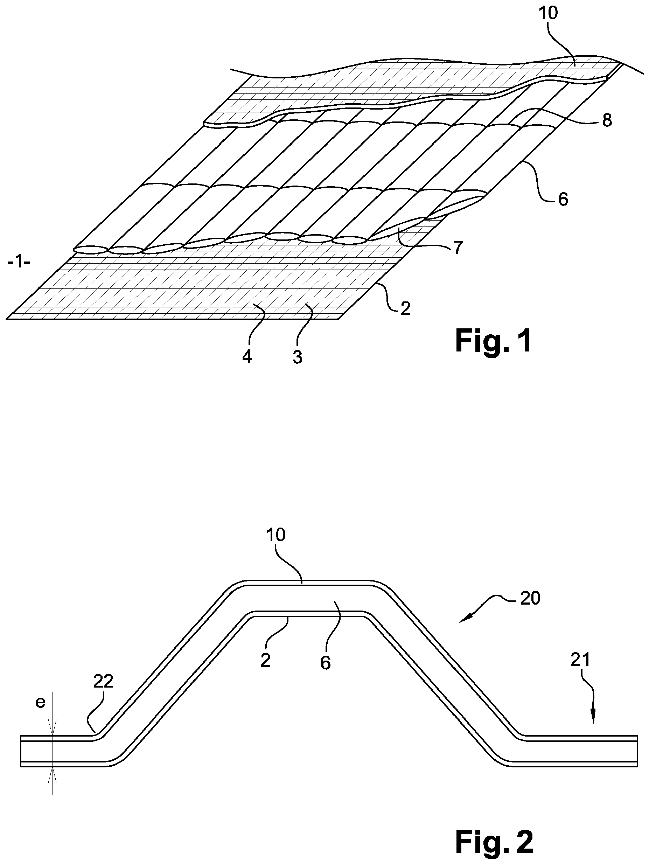

Tel qu'illustré à la figure 1, cet empilement **1** comporte une première couche **2** formée d'un tissu typiquement à base de fils de verre, comportant donc des fils de trame **3** et des fils de chaîne **4** se croisant perpendiculairement.

A titre d'exemple, la couche **2** de fils de verre peut présenter une masse de l'ordre de 50 g/m², et être formée par des fils d'un titre voisin de 11 tex .

Bien entendu, d'autres matériaux, tels que des fils de carbone ou d'aramide peuvent être employés, éventuellement en combinaison.

Cet empilement **1** comporte également une couche **6** composée de fibres naturelles sous forme d'une structure unidirectionnelle. Dans ce cas, les différents fils **7** sont orientés parallèlement. Ils peuvent être maintenus les uns à côté des autres par différents moyens, et en particulier un fil de trame **8** de titre très fin, de sorte qu'il est d'une influence négligeable sur les propriétés de la couche formant l'âme. L'influence des fils de trame **8** est faible, mais il est préférable de le positionner à 90° par rapport aux fils de fort titre **7** pour obtenir une déformation plus homogène.

A titre d'exemple, les fils **7** de la couche d'âme peuvent être à base de lin, se présentant sous forme de natte ou ruban d'une largeur de l'ordre du millimètre, formant une nappe unidirectionnelle, une masse comprise entre 150 et 400 g/m². Une telle couche présente une épaisseur de l'ordre de 0,2 à 3 mm. De préférence, les rubans sont obtenus à partir de fibres de lin qui après avoir été rassemblées en mèches, sont cardées et peignées, de manière à orienter les fibres selon une direction privilégiée. On a remarqué que ces opérations permettent d'obtenir une orientation relativement homogène des fibres, tout en conservant une épaisseur relativement importante au ruban, et une résistance à l'élongation élevée dans le sens du ruban. Par rapport aux procédés traditionnels de traitement des fibres de lin, on évitera autant que faire se peut les opérations d'étirage qui auraient tendance à casser les fibres élémentaires. De même, contrairement au conditionnement classique des mèches de lin, on évitera les opérations de retordage qui, si elles augmentent la résistance à l'allongement du ruban, ont tendance à diminuer l'épaisseur du ruban.

Dans la forme illustrée, les fils **7** de fibres naturelles sont orientés parallèlement à des fils des peaux **2** de fils de verre. Dans cette configuration, on a observé une certaine diminution de phénomènes de couplage en mode propre qu'il est possible d'attribuer à la relative irrégularité de la géométrie des fibres naturelles, irrégularité comparée à celle des fils de verre formant la peau **2.**

Toutefois, dans d'autres configurations, il est envisageable de donner aux fibres naturelles une orientation décalée par rapport à celles des fils des peaux.

Cet empilement se termine par une deuxième peau **10** analogue, voire identique, à la peau **2** située de l'autre côté de la couche d'âme **6.**

En pratique, pour la fabrication d'une membrane, on peut procéder tout d'abord par la réalisation de l'empilement des différentes couches, puis la découpe de zones aux dimensions légèrement supérieures à celles de la surface développée d'une membrane. Chacun des sous-ensembles ainsi réalisés est ensuite enduit d'une résine qui imprègne les peaux **2, 10** ainsi que la couche d'âme **6.** L'ensemble est ensuite mis en forme sous une presse chauffante permettant d'assurer la réticulation de la résine dans le cas où il s'agit d'une résine thermodurcissante.

Après la mise en forme, et comme illustré à la figure 2, l'empilement présente une forme correspondant à celle souhaitée, et typiquement tronconique dans la forme illustrée. Typiquement, l'épaisseur **e** de la membrane, donnée principalement par la couche d'âme **6** est voisine de quelques dixièmes de millimètres à quelques millimètres. L'ensemble est ensuite découpé au contour **22** de la membrane, et typiquement à la jonction entre la portion **20** de forme tronconique et les portions planes périphériques **21** destinées à être éliminées.

Comme déjà évoqué, il est également possible de fabriquer la membrane conforme à l'invention en utilisant des renforts pré-imprégnés. Dans ce cas, la résine en excès présente sur les peaux **2, 10** migrent dans l'épaisseur de l'âme **6** lors de la mise sous pression.

Il ressort de ce qui précède que la membrane conforme à l'invention présente de multiples avantages, parmi lesquels on peut citer :
- une forte rigidité du fait d'une structure sandwich écartant les deux peaux extérieures ;
- un amortissement satisfaisant, consécutif à l'emploi de fibres naturelles orientées ;
- un procédé de fabrication simplifié, permettant l'assemblage des différentes couches et la mise en forme en une seule étape ;
- l'emploi de matériau naturel.

## Revendications

1. Membrane de haut-parleur, possédant une structure sandwich, comportant une âme centrale (6) séparant deux couches (2, 10) de matériau à base de fils de haute rigidité imprégnés d'une résine polymérisée, **caractérisée en ce que** l'âme centrale (6) est exclusivement formée d'une couche de matériau à base de fibres naturelles orientées (7) sensiblement parallèlement, et imprégnées d'une résine polymérisée.

2. Membrane selon la revendication 1 **caractérisée en ce que** les couches extérieures (2, 10) incluent un tissu de fils de haute rigidité.

3. Membrane selon la revendication 1 **caractérisée en ce que** les fils de haute rigidité des couches externes sont en un matériau choisi dans le groupe comprenant le verre, le carbone, l'aramide, pris isolément ou en combinaison.

4. Membrane selon la revendication 1 **caractérisée en ce que** les fibres naturelles sont choisies parmi le groupe comprenant le lin, la soie, le chanvre, la ramie, le coco, le sisal, le jute, le bambou et le coton, pris isolément ou en combinaison.

5. Membrane selon la revendication 1, **caractérisée en ce que** les fibres naturelles se présentent sous la forme d'une structure textile unidirectionelle.

6. Membrane selon la revendication 1 **caractérisée en ce que** la résine imprégnant les couches externes est de type thermodurcissable.

7. Membrane selon la revendication 1 **caractérisée en ce que** l'âme centrale présente une épaisseur comprise entre 0,3 et 3 millimètres.

8. Membrane selon la revendication 1, dans laquelle les fibres naturelles sont à base de lin, et dans laquelle les couches extérieures sont des structures tissés à base de fils de verre.

9. Procédé de fabrication d'une membrane de haut-parleur comprenant les étapes suivantes :
- formation d'un empilement comprenant :
▪ une première couche de matériau à base de fils de haute rigidité ;
▪ une couche d'âme exclusivement formée d'une couche matériau à base de fibres naturelles orientées sensiblement parallèlement;
▪ une deuxième couche de matériau à base de fils de haute rigidité ;
- la mise en forme dudit empilement par application d'une pression et exposition à une source de chaleur, de manière à polymériser une résine présente dans ledit empilement ;
- la découpe de l'empilement mis en forme aux contours souhaités de la membrane.

10. Procédé selon la revendication 9 **caractérisé en ce que** les couches de matériau à base de fils de haute rigidité sont imprégnés d'une résine polymérique avant la réalisation de l'empilement.

11. Procédé selon la revendication 9 **caractérisé en ce que** l'empilement réalisé à partir de couches sèches et **en ce que** l'on dépose sur l'empilement une résine polymérique, de sorte que ladite résine imprègne l'ensemble des couches.

## Patentansprüche

1. Lautsprechermembran, umfassend eine Sandwich-Struktur mit einer zentralen Seele (6), welche zwei Materialschichten (2, 10) aus hochsteifen, mit einem Polymerharz imprägnierten Fasern trennt, **dadurch gekennzeichnet, dass** die zentrale Seele (6) ausschließlich aus einer Materialschicht aus natürlichen, im Wesentlichen parallel ausgerichteten und mit einem polymerisierten Harz imprägnierten Naturfasern (7) gebildet ist.

2. Membran gemäß Anspruch 1, **dadurch gekennzeichnet, dass** die Außenschichten (2, 10) ein Gewebe aus hochsteifen Fasern umfassen.

3. Membran gemäß Anspruch 1, **dadurch gekennzeichnet, dass** die hochsteifen Fasern der Außenschichten aus einem Werkstoff gebildet sind, der aus nachfolgender Werkstoffgruppe, bzw. aus einer Kombination daraus ausgewählt ist, die Glas, Kohlenstoff, Aramid umfasst.

4. Membran gemäß Anspruch 1, **dadurch gekennzeichnet, dass** die Naturfasern aus einem Werkstoff gebildet sind, der aus nachfolgender Werkstoffgruppe, bzw. aus einer Kombination daraus ausgewählt ist, die Leinen, Seide, Hanf, Chinagras, Kokosfaser, Sisal, Jute, Bambus und Baumwolle umfasst.

5. Membran gemäß Anspruch 1, **dadurch gekennzeichnet, dass** sich die Naturfasern in der Form einer unidirektionalen Textilstruktur präsentieren.

6. Membran gemäß Anspruch 1, **dadurch gekennzeichnet, dass** das die Außenschichten imprägnierende Harz hitzehärtbar ist.

7. Membran gemäß Anspruch 1, **dadurch gekennzeichnet, dass** die zentrale Seele eine Dicke von 0,3 bis 3 mm aufweist.

8. Membran gemäß Anspruch 1, **dadurch gekennzeichnet, dass** ihre Naturfasern aus Leinen sind und dass die Außenschichten gewebte Strukturen aus Glasfaser sind.

9. Herstellungsverfahren einer Lautsprechermembran, welches nachfolgende Etappen umfasst:
- Bildung eines Stapels, umfassend:
- eine erste Werkstoffschicht aus hochsteifen Fasern;
- eine Seelenschicht, die ausschließlich aus einer Schicht Werkstoff aus Naturfasern gebildet ist, welche im Wesentlichen parallel ausgerichtet sind;
- eine zweite Werkstoffschicht aus hochsteifen Fasern;
- Formgebung des besagten Stapels durch Anwendung eines Drucks und Einwirkung einer Wärmequelle, um ein, im besagten Stapel präsentes Harz zu polymerisieren;
- Zuschneiden des geformten Stapels auf die gewünschten Umrisse der Membran.

10. Verfahren gemäß Anspruch 9, **dadurch gekennzeichnet, dass** die Materialschichten aus hochsteifen Fasern vor der Bildung des Stapels mit einem Polymerharz imprägniert werden.

11. Verfahren gemäß Anspruch 9, **dadurch gekennzeichnet, dass** der Stapel auf der Grundlage von trockenen Schichten gebildet wird und dass ein Polymerharz auf den Stapel aufgetragen wird, so dass dieses Harz sämtliche Schichten imprägniert.

## Claims

1. Loudspeaker membrane with a sandwich structure, which comprises a central core (6) separating two layers (2, 10) of materials made of high-rigidity yarn, impregnated with a polymerised resin, **wherein** the central core (6) is formed of a material made exclusively of oriented natural fibres (7) that are nearly parallel to each other and are impregnated with a polymer resin.

2. Membrane according to Claim 1, **wherein** the outer layers (2, 10) comprise a textile made of high-rigidity yarn.

3. Membrane according to Claim 1, **wherein** the high-rigidity yarn of the outer layers are made of a material selected from the group comprising glass, carbon and aramid, taken individually or in combination with each other.

4. Membrane according to Claim 1, **wherein** the natural fibres are chosen from the group comprising flax, silk, hemp, ramie, coir, sisal, jute, bamboo and cotton, taken either individually or in combination with each other.

5. Membrane according to Claim 1, **wherein** the natural fibres are in the form of a unidirectional textile structure.

6. Membrane according to Claim 1, **wherein** the resin impregnating the outer layers is of the thermosetting type.

7. Membrane according to Claim 1, **wherein** the central core has a thickness that ranges from 0.3 to 3 millimetres.

8. Membrane according to Claim 1, wherein the natural fibres are made of flax and wherein the outer layers are woven structures made of glass yarn.

9. Manufacturing process of a loudspeaker membrane comprising the following stages:
- formation of a stack comprising:
▪ a first layer of material made of high-rigidity yarn;
▪ a core layer formed exclusively of a material layer made of natural fibres oriented substantially parallel to each other;
▪ a second layer of material made of high-rigidity yarn;
- the shaping of the said stack by applying pressure and exposing it to a source of heat in order to polymerise a resin that is present in the said stack;
- the cutting of the shaped stack to match it to the desired contours of the membrane.

10. Process according to Claim 9. **wherein** the layers of the material made of high-rigidity yarn are impregnated with a polymer resin before the stack is formed.

11. Process according to Claim 9. **wherein** the stack is created using dry layers and a polymer resin is deposited on the stack, such that the said resin impregnates all of the layers.
